# EUROPÄISCHE PATENTSCHRIFT

(11) **EP 1 585 417 B1**
(45) Veröffentlichungstag und Bekanntmachung des Hinweises auf die Patenterteilung: **28.06.2006**
(21) Anmeldenummer: 03757883.8
(22) Anmeldetag: 22.09.2003
(51) Int. Cl.: A47J 43/044, A47J 43/07

(54) **KÜCHENGERÄT MIT SPEZIELLER LAGEREINRICHTUNG**
KITCHEN APPLIANCE COMPRISING A SPECIAL MOUNTING DEVICE
USTENSILE DE CUISINE COMPORTANT UN DISPOSITIF DE LOGEMENT SPECIAL

(30) Priorität: 25.09.2002 DE 10244715
(43) Veröffentlichungstag der Anmeldung: 19.10.2005
(73) Patentinhaber: BSH Bosch und Siemens Hausgeräte GmbH, 81739 München (DE)
(72) Erfinder: BREZOVNIK, Peter, 3330 Mozirje (SI); PAVLOVIC, Henrik, Ljubno ob Savin 3333 (SI); ZIBRET, Igor, 3327 Smartno ob Paki (SI); SEDOVSEK, Aleksander, 3330 Mozirje (SI)
(86) Internationale Anmeldenummer: PCT/EP2003/010533
(87) Internationale Veröffentlichungsnummer: WO 2004/030503

(56) Entgegenhaltungen:
- WO-A-00/30516
- WO-A-02/32278
- FR-A- 2 768 608

## Beschreibung

Die vorliegende Erfindung betrifft ein Küchengerät zum Verarbeiten eines Lebensmittels mit einer Schüsseleinrichtung, in die das zu verarbeitende Lebensmittel einführbar ist, einer Werkzeugeinrichtung, die in die Schüsseleinrichtung ragt oder die in der Schüsseleinrichtung angeordnet ist, und einer Lagereinrichtung, mit der die Werkzeugeinrichtung in der Schüsseleinrichtung drehbar gelagert ist.

Bei einer Vielzahl von Küchengeräten werden zur Zerkleinerung oder zum Mischen von Lebensmitteln rotierende Werkzeuge in entsprechend gestalteten Schüsseln eingesetzt. Die Werkzeuge, z. B. Messer oder Schlagscheiben, werden häufig am Boden der Schüssel drehbar gelagert.

Zu derartigen Küchengeräten zählen auch sogenannte Chopper (Zerhacker), mit denen gröbere Bestandteile von Lebensmitteln zerkleinert und gegebenenfalls zu Mus verarbeitet werden können. Die Chopper können aber auch zum Mischen von flüssigen beziehungsweise breiartigen Lebensmitteln sowie zum Schlagen von Sahne und dergleichen verwendet werden.

Der Aufbau eines Choppers besteht typischerweise aus einem schüsselartigen Behältnis und einer mit hoher Drehzahl rotierenden Funktionseinheit (Arbeitswerkzeug), die in der Regel am Boden des Behältnisses angeordnet ist. Der Antrieb dieser Funktionseinheit beziehungsweise dieses Werkzeugs kann unterhalb oder oberhalb des Behältnisses vorgesehen sein. Das Behältnis wird meist mit einem Deckel verschlossen, um ein Herausspritzen aus dem Behältnis zu vermeiden.

Die Lagerung des Werkzeugs am Boden der Schüssel muss stets mehreren Anforderungen genügen. Zum einen muss der Widerstand beim Drehen möglichst gering sein und zum anderen muss das Lager leicht zu reinigen sein, insbesondere, wenn das Werkzeug aus der Schüssel entnommen ist.

Ein gattungsgemäßes Küchengerät ist in der internationalen Patentanmeldung WO 00/30516 beschrieben. Dort ist das Arbeitswerkzeug eines Küchengeräts durch einen halbkugelförmigen Vorsprung in einer Vertiefung am Boden der Schüssel gelagert. Die untere axiale Stirnseite des Werkzeugs ist im Wesentlichen eben ausgebildet. Damit ergibt sich eine erste periphere Kontaktzone um die Vertiefung und eine zweite periphere Kontaktzone um den Vorsprung, die miteinander zusammenwirken. Zwischen der ersten peripheren Kontaktzone und der zweiten peripheren Kontaktzone befindet sich ein Abstand, wenn die Rotationsachse des Werkzeugs senkrecht zu der Ebene der ersten Kontaktzone steht. Der Abstand ist so gewählt, dass sich die Werkzeugachse um einen vorgegebenen Winkel neigen kann.

Die Aufgabe der vorliegenden Erfindung besteht darin, ein Küchengerät vorzuschlagen, bei der die Werkzeugeinrichtung in der Schüsseleinrichtung kostengünstig gelagert ist.

Erfindungsgemäß wird diese Aufgabe gelöst durch ein Küchengerät zum Verarbeiten eines Lebensmittels mit einer Schüsseleinrichtung, in die das zu verarbeitende Lebensmittel einfüllbar ist, einer Werkzeugeinrichtung, die in die Schüsseleinrichtung ragt oder die in ihr angeordnet ist, und einer Lagereinrichtung, mit der die Werkzeugeinrichtung in der Schüsseleinrichtung drehbar gelagert ist, wobei die Lagereinrichtung einen kegelstumpfförmigen Zapfen und eine Auflagereinheit mit einer im Wesentlichen kegelstumpfförmigen Ausnehmung, in deren Zentrum sich ein axial erstreckender Vorsprung befindet, umfasst, so dass die Auflagereinheit punktförmig auf dem kegelstumpfförmigen Zapfen axial aufliegt und durch die Innenwand der kegelstumpfförmigen Ausnehmung auf dem kegelstumpfförmigen Zapfen radial geführt ist.

Diese Lösung besitzt den Vorteil, dass für die Lagereinrichtung keine zusätzlichen Teile notwendig sind und damit eine kostengünstige Konstruktion gefunden ist. Darüber hinaus lässt sich das Küchengerät wegen der einfachen Konstruktion der Lagereinrichtung einfach reinigen.

Bei einer vorteilhaften Ausgestaltung des erfindungsgemäßen Küchengeräts ist der Vorsprung halbkugelförmig ausgebildet. Damit ergibt sich eine punktförmige Lagerung des Werkzeugs in der Schüssel mit einem entsprechend geringen Drehwiderstand. Der gleiche Effekt ist zu erzielen, wenn der Vorsprung kegelförmig gestaltet ist und die Lagerung auf der Kegelspitze stattfindet.

Der Kegelwinkel des kegelstumpfförmigen Zapfens sollte vorzugsweise zwischen acht und zwölf Grad liegen. Besonders vorteilhaft ist eine Ausführung, bei der der Kegelwinkel zehn Grad beträgt.

In gleicher Weise sollte auch der Kegelwinkel der kegelstumpfförmigen Ausnehmung der Auflagereinheit zwischen acht und zwölf Grad liegen. Auch hier ist es besonders vorteilhaft, wenn der Kegelwinkel zehn Grad beträgt.

Der Zapfen der Lagereinrichtung kann einteilig mit der Schüsseleinrichtung verbunden sein. Damit kann beispielsweise die Schüssel mit dem Zapfen als ein einziges Spritzgussteil hergestellt werden.

In gleicher Weise kann die Auflagereinheit einteilig mit der Werkzeugeinrichtung gebildet sein. Damit kann beispielsweise der Schaft eines Drehmessers oder einer Schlagscheibe mit der Auflagereinheit einstückig als Kunststoffteil gegossen werden.

Die vorliegende Erfindung wird nun anhand der beigefügten Zeichnungen näher erläutert, in denen zeigen:
- Figur 1: eine Querschnittsansicht eines erfindungsgemäßen Choppers; und
- Figur 2: eine Querschnittsansicht durch eine erfindungsgemäße Lagereinrichtung.

Die nachfolgend aufgeführten Ausführungsformen stellen bevorzugte Ausführungsbeispiele der vorliegenden Erfindung dar.

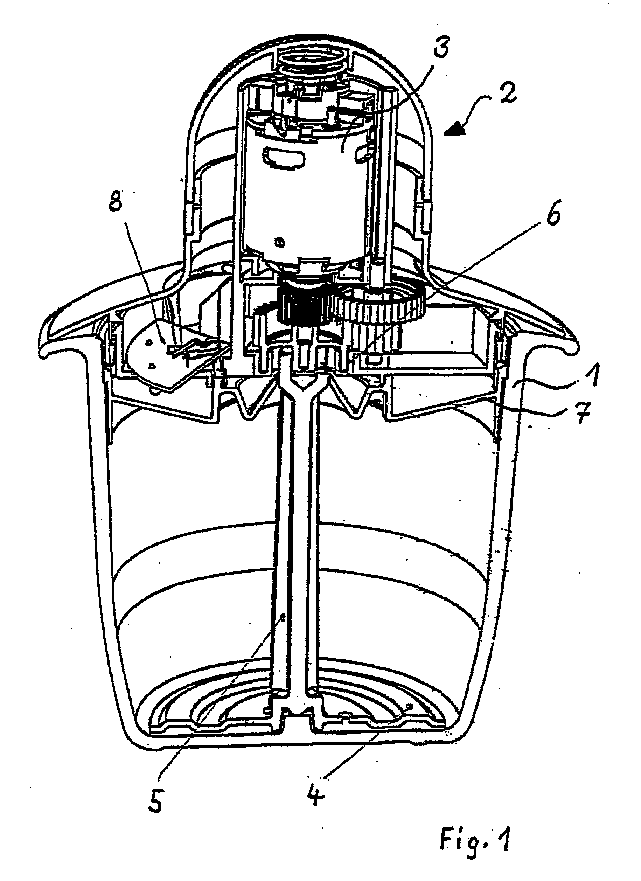

Figur 1 zeigt einen Querschnitt durch einen Chopper. Der Chopper umfasst eine Schüssel 1 und einen Deckel 2. Der Deckel 2 dient nicht nur zum Abdichten der Schüssel 1 sondern beinhaltet gleichzeitig einen elektrischen Kleinmotor 3 einschließlich Getriebe zum Antrieb einer Schlagscheibe 4, die am Boden der Schüssel 1 drehbar gelagert ist. Eine Welle 5 überträgt das Drehmoment vom Getriebe des Elektromotors 3 zu der Schlagscheibe 4. Die Schlagscheibe 4 dient beispielsweise zum Schlagen von Eiklar oder Sahne.

Die Lagerung der Welle 5 in dem Deckel 2 unterhalb des Getriebes des Elektromotors 3 erfolgt durch ein Axial/Radial-Gleitlager 6.

An der Unterseite des Deckels zum Inneren der Schüssel zugewandt befindet sich ein Deckabschnitt 7. Dieser Deckabschnitt dient zum Abdecken beziehungsweise Abdichten des in der Schüssel 1 befindlichen fließenden Mediums, wie Flüssigkeiten, Brei, Eiswürfel, etc. Der Deckabschnitt 7 ist zur Durchführung der Welle 5 im Zentrum durchbrochen.

Der Deckel 2 weist ferner einen integrierten Schalter 8 auf, der mit einer Sicherheitsfunktion ausgestattet ist. Erst wenn der Deckel 2 auf die Schüssel 1 ordnungsgemäß aufgebracht ist, erlaubt dieser Sicherheitsschalter 8 den Betrieb des Choppers.

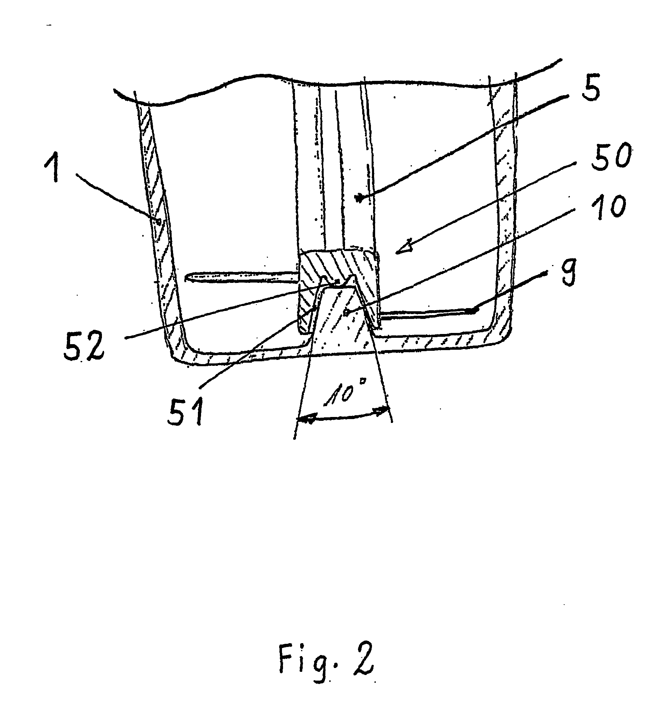

In Figur 2 ist ein Querschnitt durch die Lagereinrichtung eines erfindungsgemäßen Küchengeräts dargestellt. Die Schüssel 1 besitzt am Boden im Zentrum einen kegelstumpfförmigen Zapfen 10, der in das Innere der Schüssel 1 ragt. Die Welle beziehungsweise der Schaft 5 des Arbeitswerkzeugs besitzt an seinem Ende eine Auflagereinheit 50. Diese Auflagereinheit 50 ist mit dem Schaft 5 einteilig verbunden und besitzt an der dem Zapfen 10 zugewandten Seite eine kegelstumpfförmige Ausnehmung 51. Der Kegelwinkel der kegelstumpfförmigen Ausnehmung 51 entspricht in etwa dem Kegelwinkel des Zapfens 10. Der Zapfen 10 besitzt, wie in Figur 2 dargestellt ist, einen Kegelwinkel von zehn Grad.

Am Boden der kegelstumpfförmigen Ausnehmung 51 ist ein halbkugelförmiger Vorsprung 52 ausgebildet. Seine Spitze ragt in Richtung des Zapfens 10, wenn das Werkzeug in die Schüssel 1 eingesetzt ist.

Die axiale Lagerung des Werkzeugs, das im Fall von Figur 2 aus einem Schaft 5 und daran angeordneten Messerklingen 9 besteht, erfolgt somit punktförmig, wobei die Spitze des halbkugelförmigen Vorsprungs 52 auf die Stirnseite des kegelstumpfförmigen Zapfens 10 drückt. Eine radiale Führung des Werkzeugs auf dem Zapfen 10 wird durch die Ausnehmung 51 gewährleistet. Dabei sorgt ein Umfangsspalt zwischen der Innenwand der Ausnehmung 51 und der Außenwand des Zapfens 10 für ein gewisses radiales Spiel. Dieser Spalt erlaubt auch eine geringfügige Neigung des Schafts 5 zur Mittelsenkrechten des Bodens der Schüssel 1.

Für die Lagerung des Werkzeugs am Boden der Schüssel 1 sind somit keine zusätzlichen Teile notwendig. Vielmehr sind die Lagerkomponenten entweder einteilig mit der Schüssel 1 oder dem Schaft 5 des Werkzeugs verbunden. Folglich ist das Küchengerät sehr kostengünstig herzustellen.

Zur Reinigung des Küchengeräts ist lediglich das Werkzeug von dem Zapfen 10 abzunehmen. Der Schüsselboden weist nur eine Erhebung, nämlich den Zapfen 10, auf. Auch das Werkzeug ist speziell in der Ausnehmung 51 ohne Mühen zu reinigen, da in der Ausnehmung runde beziehungsweise rundliche Flächen vorherrschen.

## Patentansprüche

1. Küchengerät zum Verarbeiten eines Lebensmittels mit
einer Schüsseleinrichtung (1), in die das zu verarbeitende Lebensmittel einfüllbar ist,
einer Werkzeugeinrichtung (4, 5), die in die Schüsseleinrichtung (1) ragt oder die in ihr angeordnet ist, und
einer Lagereinrichtung (10, 50), mit der die Werkzeugeinrichtung (4, 5) in der Schüsseleinrichtung (1) drehbar gelagert ist,
**dadurch gekennzeichnet, dass**
die Lagereinrichtung (10, 50) einen kegelstumpfförmigen Zapfen (10) und eine Auflagereinheit (50) mit einer im Wesentlichen kegelstumpfförmigen Ausnehmung (51), in deren Zentrum sich ein axial erstreckender Vorsprung (52) befindet, umfasst, so dass die Auflagereinheit (50) punktförmig auf dem kegelstumpfförmigen Zapfen (10) axial aufliegt und durch die Innenwand der kegelstumpfförmigen Ausnehmung (51) auf dem kegelstumpfförmigen Zapfen (10) radial geführt ist.

2. Küchengerät nach Anspruch 1, wobei der Vorsprung (52) halbkugelförmig ist.

3. Küchengerät nach Anspruch 1 oder 2, wobei der Kegelwinkel des kegelstumpfförmigen Zapfens (10) zwischen acht und zwölf Grad liegt.

4. Küchengerät nach einem der Ansprüche 1 bis 3, wobei der Kegelwinkel der kegelstumpfförmigen Ausnehmung (51) der Auflagereinrichtung (50) zwischen acht und zwölf Grad liegt.

5. Küchengerät nach einem der Ansprüche 1 bis 4, wobei der Zapfen (10) einteilig mit der Schüsseleinrichtung (1) gebildet ist.

6. Küchengerät nach einem der Ansprüche 1 bis 5, wobei die Auflagereinheit (50) einteilig mit der Werkzeugeinrichtung (4, 5) gebildet ist.

7. Küchengerät nach einem der Ansprüche 1 bis 6, wobei die Werkzeugeinrichtung (4, 5) eine Messereinheit (9) oder eine Schlagscheibe (4) umfasst.

## Claims

1. Kitchen appliance for processing a foodstuff, with a bowl device (1) into which the foodstuff to be processed can be filled, a tool device (4, 5) projecting into or arranged in the bowl device (1), and a mounting device (10, 50) by which the tool device (4, 5) is rotatably mounted in the bowl device (1), **characterised in that** the mounting device (10, 50) comprises a frusto-conical pin (10) and a support unit (50) with a substantially frusto-conical recess (51), in the centre of which an axially extending projection (52) is disposed, so that the support unit (50) axially rests punctiformly on the frusto-conical pin (10) and is radially guided by the inner wall of the frusto-conical recess (51) onto the frusto-conical pin (10).

2. Kitchen appliance according to claim 1, wherein the projection (52) is hemispherical.

3. Kitchen appliance according to claim 1 or 2, wherein the cone angle of the frusto-conical pin (10) lies between eight and twelve degrees.

4. Kitchen appliance according to one of claims 1 to 3, wherein the cone angle of the frusto-conical recess (51) of the support device (50) lies between eight and twelve degrees.

5. Kitchen appliance according to one of claims 1 to 4, wherein the pin (10) is formed integrally with the bowl device (1).

6. Kitchen appliance according to one of claims 1 to 5, wherein the support device (50) is formed integrally with the tool device (4, 5).

7. Kitchen appliance according to one of claims 1 to 6, wherein the tool device (4, 5) comprises a knife unit (9) or a beater disc (4).

## Revendications

1. Ustensile de cuisine pour transformer un aliment, comprenant
un dispositif de bol (1) dans lequel l'aliment à transformer peut être versé,
un dispositif d'outil (4, 5) qui pénètre dans le dispositif de bol (1) ou qui est agencé dans celui-ci, et
un dispositif de logement (10, 50) à l'aide duquel le dispositif d'outil (4, 5) est monté mobile dans le dispositif de bol (1),
**caractérisé en ce que**
le dispositif de logement (10, 50) comprend un tourillon tronconique (10) et un élément d'appui (50) muni d'un creux (51) essentiellement tronconique, creux au centre duquel se trouve une protubérance (52) s'étendant axialement, de telle sorte que l'élément d'appui (50) repose ponctuellement dans l'axe sur le tourillon tronconique (10) et est guidé radialement sur le tourillon tronconique (10) par la paroi interne du creux tronconique (51).

2. Ustensile de cuisine selon la revendication 1, dans lequel la protubérance (52) est hémisphérique.

3. Ustensile de cuisine selon la revendication 1 ou 2, dans lequel l'angle de cône du tourillon tronconique (10) est compris entre huit et douze degrés.

4. Ustensile de cuisine selon l'une des revendications 1 à 3, dans lequel l'angle de cône du creux tronconique (51) du dispositif d'appui (50) est compris entre huit et douze degrés.

5. Ustensile de cuisine selon l'une des revendications 1 à 4, dans lequel le tourillon (10) est réalisé en une pièce avec le dispositif de bol (1).

6. Ustensile de cuisine selon l'une des revendications 1 à 5, dans lequel l'élément d'appui (50) est réalisé en une pièce avec le dispositif d'outil (4, 5).

7. Ustensile de cuisine selon l'une des revendications 1 à 6, dans lequel le dispositif d'outil (4, 5) comprend un ensemble de couteaux (9) ou un disque batteur (4).
